# EUROPÄISCHE PATENTSCHRIFT

(11) **EP 1 116 954 B1**
(45) Veröffentlichungstag und Bekanntmachung des Hinweises auf die Patenterteilung: **30.08.2006**
(21) Anmeldenummer: 01250014.6
(22) Anmeldetag: 10.01.2001
(51) Int. Cl.: G01P 3/487, G01P 3/484, G01P 13/04

(54) **Elektronischer Umdrehungszähler**
Electronic revolution counter
Compteur de rotations électroniques

(30) Priorität: 12.01.2000 DE 10001676
(43) Veröffentlichungstag der Anmeldung: 18.07.2001
(73) Patentinhaber: Hübner Elektromaschinen GmbH, 10967 Berlin (DE)
(72) Erfinder: Sawitzki, Uwe, 12307 Berlin (DE); Jankowski-Demel, Bernd, 13055 Berlin (DE)
(74) Vertreter: Böning, Manfred

(56) Entgegenhaltungen:
- EP-A- 0 550 794
- DE-A- 4 442 193
- GB-A- 819 043

## Beschreibung

Die Erfindung betrifft einen elektronischen Umdrehungszähler nach dem Oberbegriff des Anspruchs 1.

Im Anlagen- und Apparatebau müssen Bauteile häufig sich wiederholende Bewegungen ausführen und dabei bestimmte Positionen anfahren. Die kostengünstigste Lösung zur Positionsbestimmung besteht darin, die Umdrehungen des Antriebsmotors des jeweiligen Bauteiles zu zählen und mit einem Sollwert zu vergleichen.

Beim Zählen der Umdrehungen ist dafür Sorge zu tragen, daß die jeweilige Positionsangabe nicht flüchtig ist, d.h. auch nach Abschalten der Energieversorgung (Stillstand nach Arbeitsende oder während der Betriebsferien) nicht verloren geht.

Eine weitverbreitete Lösung besteht in einer mechanischen Speicherung der Information mit Hilfe eines vielstufigen Getriebes, bei dem jeder Getriebestufe ein bestimmter Zählwert zugeordnet wird. Nach Einschalten der Energieversorgung läßt sich der aktuelle Zählerstand ablesen. Bei hochtourigen Antrieben ist diese mechanische Lösung weniger vorteilhaft, da zumindest die erste Stufe der mechanischen Untersetzung einem hohen Verschleiß unterliegen kann. Entsprechende Verschleißprobleme lassen sich dadurch vermeiden, daß man die Umdrehungen elektronisch erfaßt und speichert. Dies geschieht bei einem aus der DE 44 07 474 C1 bekannten Drehwinkelsensor dadurch, daß mindestens zwei, zueinander versetzt auf einem Kreisumfang feststehend angeordnete Impulsdraht-Bewegungssensoren (Wiegand-Sensoren) von mindestens einem Dauermagneten betätigt werden. Wiegand-Sensoren haben sich, obwohl schon seit mehreren Jahrzehnten bekannt, in der Technik aufgrund der nicht einfachen magnetischen Ansteuerung nicht auf breiter Front durchgesetzt, so daß es sich heute aufgrund der geringen gefertigten Stückzahl um teure Bauelemente handelt. Mechanisch arbeitende Schalter sind wesentlich billiger und werden deshalb in der Patentschrift JP 61-138165 A zum Zählen der Umdrehungen eingesetzt. Bekannt ist auch der Einsatz von mechanischen Schaltern in Form von sogenannten Reed-Kontakten, die zum Schutz vor Umwelteinflüssen in Glasampullen eingeschweißt sind und die aufgrund der geringen Masse ihrer Kontaktzungen über eine hohe Schaltfrequenz verfügen. Ein mit mindestens drei dieser Reed-Kontakte ausgestattetes elektronisches Zählwerk für einen Wasserzähler ist in der DE 44 42 193 A1 beschrieben. Ein mit von Reed-Kontakten gebildeten Schaltelementen ausgestatteter Umdrehungszähler ist außerdem aus der EP 0 550 794 B1 bekannt. Bei diesem Umdrehungszähler werden zwei unter einem Winkel von 90° zueinander versetzte Reed-Kontakte durch einen mit der Geberwelle umlaufenden halbkreisförmigen Magneten betätigt. Der Nachteil der bekannten, mit mechanischen Schaltelementen, insbesondere Reed-Kontakten ausgestatteten Umdrehungszähler besteht darin, daß die Schaltzungen ihrer Schaltelemente aufgrund ihrer geringen Masse in Fällen schockartiger Krafteinwirkungen schließen oder öffnen und auf diese Weise fehlerhafte Zählimpulse auslösen können.

Der Erfindung liegt die Aufgabe zugrunde, einen stoßunempfindlichen elektronischen Umdrehungszähler zu schaffen, bei dem ein vergleichsweise kleiner Magnet ausreicht, um einwandfreie Schaltimpulse zu liefern. Diese Aufgabe wird bei einem Umdrehungszähler der in Betracht gezogenen Art durch die kennzeichnenden Merkmale des Anspruches 1 gelöst.

Die erfindungsgemäße Lehre ermöglicht im Hinblick darauf, daß der zur Erzeugung der Zählimpulse verwendete Magnet klein sein kann, eine kompakte Bauweise des Umdrehungszählers. Da die Schaltelemente eines jeden Schaltelementpaares so zueinander orientiert sind, daß sich ihre Kontaktzungen jeweils in entgegengesetzter Position befinden, kommt ein gleichzeitiges Öffnen bzw. Schließen beider Kontakte eines Schaltelementpaares durch äußere Schockeinwirkungen nicht in Betracht. Durch die Anordnung der Schaltelemente eines Schaltelementpaares zwischen Masse und Schaltungseingang in Reihe ist sichergestellt, daß ein Schaltimpuls nur dann zum dem Schaltelementpaar zugeordneten Eingang der in Form von Hard- oder Software realisierten Logikschaltung gelangt.

Auf der Basis der durch die erfindungsgemäße Anordnung gewonnenen Impulse werden nach bekannten Verfahren Signale zum Herauf- oder Herabsetzen eines elektronischen Zählers erzeugt. Der Zählerstand kann dann in üblicher Weise gelesen werden.

Weitere Einzelheiten der Erfindung ergeben sich aus der nachstehenden Beschreibung mehrerer in der beigefügten Zeichnung dargestellter Lösungen, weitere Merkmale aus den Unteransprüchen. Es zeigen:
- Fig. 1: die bevorzugte Ausführungsform der Erfindung und
- Fig. 2: eine geringfügig modifizierte Ausführungsform des Umdrehungszählers gemäß Fig. 1.

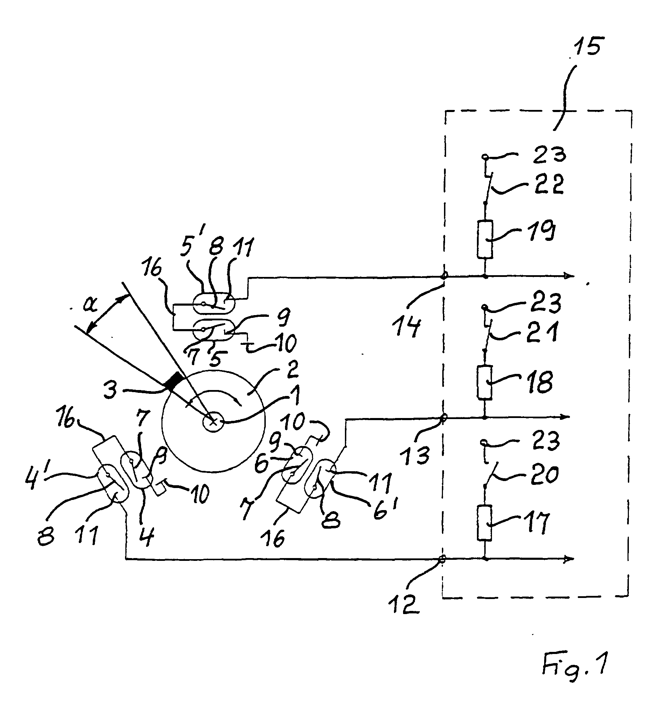

In Fig. 1 ist 1 die Geberwelle eines elektronischen Umdrehungszählers. Mit der Geberwelle 1 ist eine Tragscheibe 2 für einen Magneten 3 verbunden, der sich über einen Drehwinkel α von weniger als 25° erstreckt. Über den Umfang der Geberwelle 1 sind drei Schaltelementpaare 4,4'; 5,5' und 6,6', deren Schaltelemente vorzugsweise von Reedschaltern gebildet werden, gleichmäßig verteilt, d.h. der Winkelabstand zwischen ihnen beträgt jeweils 120°. Wie aus der Zeichnung erkennbar, sind die Kontaktzungen 7 bzw. 8 der Schaltelemente eines jeden Schaltelementpaares so angeordnet, daß sie unter dem Einfluß des Feldes des sie passierenden Magneten 3 gegenläufige Schließbewegungen ausführen. Ein Kontakt 9 eines jeden Schaltelementpaares ist mit der Masse 10 und ein Kontakt 11 mit jeweils einem von drei Eingängen 12, 13 und 14 einer von einem Mikroprozessor gebildeten Schaltung 15 verbunden. Eine Leitung 16 verbindet die Kontaktzungen 7, 8, so daß die Schaltelemente eines jeden Schaltelementpaares in Reihe angeordnet sind. Die Eingänge 12, 13 und 14 stehen über sogenannte Pull-up-Widerstände 17, 18, 19 und Schalter 20, 21 und 22 mit einer Spannungsquelle 23 in Verbindung, die bei geschlossenen Schaltern 20, 21, 22 bewirkt, daß an den jeweiligen Eingängen 12, 13, 14 und den mit diesen verbundenen Kontakten 11 ein High-Potential anliegt.

Bewegt sich der Magnet 3 im Uhrzeigersinn, und passiert er die Schaltelemente 4,4', so werden durch gegenläufige Bewegungen der Kontaktzungen 7, 8 die Kontakte 9 und 11 des Schaltelementpaares 4,4' während des Passiervorganges vorübergehend geschlossen. Dies bedeutet, daß am Eingang 12 Massepotential zur Anlage kommt und die Schaltung 15 mit einem Low-Signal beaufschlagt wird. Der Mikroprozessor wertet dieses Signal aus und öffnet den Schalter 20, so daß der Widerstand 17 von der Spannungsquelle 23 getrennt ist. Sollte der Magnet 3 im Bereich des Schaltelementpaares 4,4' stehen bleiben und sollten die Schaltelemente 4,4' geschlossen bleiben, so kann gleichwohl kein Strom nach Masse fließen.

Mit dem Öffnen des Schalters 20 werden die Schalter 21 und 22 geschlossen bzw. in der geschlossenen Position bestätigt. Dreht sich der Magnet 3 im Uhrzeigersinn weiter und erreicht er das Schaltelementpaar 5,5', so wird das durch den Widerstand 19 und den geschlossenen Schalter 22 auf High angehobene Potential des Einganges 14 nach Masse abgesenkt, da die Schaltelemente 5,5' schließen. Die Absenkung veranlaßt den Mikroprozessor zum Öffnen des Schalters 22 und zum Schließen des Schalters 20, während der Schalter 21 in seiner Stellung bestätigt wird.

Bei fortschreitender Drehung des Magneten 3 kommt es zur Schließung des Schaltelementpaares 6,6' und das vom Schalter 21 über den Widerstand 18 auf den Eingang 13 gelegte High-Potential wird nach Masse gezogen. Auch dies wertet der Mikroprozessor aus, wobei er aus der Schaltfolge der Eingänge 12, 13, 14 die Rechtsdrehung der Geberwelle 1 erkennt.

Die beschriebene Anordnung macht eine Entprellung der Schaltelemente 4,4' ; 5,5' und 6,6' überflüssig, da der Mikroprozessor bereits auf das erste Schließen der Kontakte 9, 11 durch die Kontaktzungen 7, 8 reagiert. Ein Prellen der Kontaktzungen 7, 8 oder eine Pendelbewegung des Magneten 3 löst keinen neuen Schaltvorgang aus, da letzterer das Wiederanschalten des durch den ersten Schaltvorgang jeweils von der Spannungsquelle 23 getrennten Widerstandes voraussetzt. Der jeweilige Widerstand wird aber - wie zuvor beschrieben - erst dann wieder mit der Spannungsquelle verbunden, wenn sich der Magnet 3 in die eine oder andere Richtung um 120° weiterbewegt hat.

Da die Kontaktzungen 7, 8 der jeweiligen Schaltelementpaare 4,4' ; 5,5' und 6,6' sich unter dem Einfluß des Magnetfeldes in entgegengesetzte Richtungen bewegen, sind Fehlimpulse durch Schockeinwirkungen ausgeschlossen. Denn unter dem Einfluß eines Stoßes kann nur jeweils eine Kontaktzunge eines geöffneten Schaltelementes schließen, während die andere Kontaktzunge in ihrer offenen Schaltstellung gehalten wird. Ein Low-Signal erreicht den Mikroprozessor aber nur dann, wenn sein jeweiliger Eingang über den Kontakt 11, die Kontaktzunge 8, die Leitung 16, die Kontaktzunge 7 und den Kontakt 9 mit der Masse 10 verbunden wird.

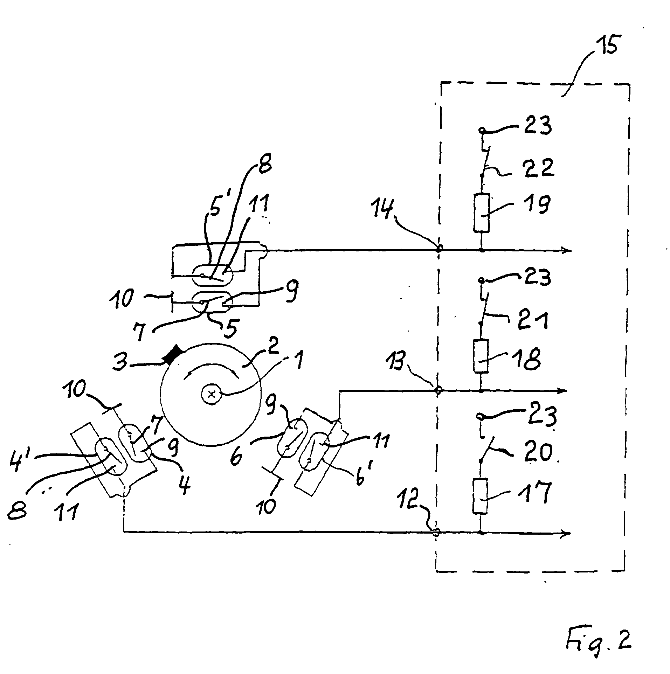

Fig. 2, in der für gleiche Teile die gleichen Bezugszeichen wie in Fig. 1 verwendet sind, macht deutlich, daß es für die zuvor beschriebene Wirkungsweise des Umdrehungszählers nicht auf eine bestimmte Art der Verbindung der Schaltelemente 4,4' ; 5,5' und 6,6' mit der Masse 10 und den Eingängen 12, 13, 14 der von einem Mikroprozessor gebildeten Schaltung 15 ankommt. Wichtig ist nur, daß die Schaltelemente eines jeden Schaltelementpaares jeweils elektrisch in Reihe liegen.

## Patentansprüche

1. Elektronischer Umdrehungszähler für Antriebsmotore von Arbeitsgeräten mit einer Schaltung zum Erfassen der Umdrehungen und der Drehrichtung einer Geberwelle sowie mit einer drehrichtungsabhängigen Zähleinheit, die die Umdrehungen zwecks Anzeige eines jeweils aktuellen Summenwertes addiert bzw. subtrahiert, wobei zur Erzeugung von den Umdrehungszahlen entsprechenden Impulsen in Drehrichtung der Geberwelle zueinander versetzt angeordnete, durch ein mit der Drehung der Geberwelle sich änderndes Magnetfeld betätigte Schaltelemente dienen, **dadurch gekennzeichnet, daß** mindestens drei Schaltelementpaare (4,4'; 5,5'; 6,6') mit jeweils zwei in Reihe liegenden Schaltelementen (4,4' bzw. 5,5' bzw. 6,6') über den Umfang der Geberwelle (1) verteilt sind, daß die Kontaktzungen (7, 8) der Schaltelemente (4,4'; 5,5'; 6,6') des jeweiligen Schaltelementpaares (4,4' bzw. 5,5' bzw. 6,6') durch das auf sie einwirkende Magnetfeld in entgegengesetzte Richtung bewegbar sind, daß zur Erzeugung des Magnetfeldes ein mit der Geberwelle (1) umlaufender Magnet (3) dient, der sich über einen Drehwinkel der Geberwelle (1) erstreckt, der kleiner ist als die Hälfte des Drehwinkels, den die Geberwelle zwischen jeweils zwei aufeinanderfolgenden Schaltelementpaaren (4,4'-5,5' bzw. 5,5'-6,6' bzw. 6,6'-4,4') zurücklegt, und daß jeweils ein Schaltelement (4, 5, 6) eines jeden Schaltelementpaares (4,4'; 5,5'; 6,6') an Masse (10) liegt und jeweils ein Schaltelement (4', 5', 6') eines jeden Schaltelementpaares (4,4'; 5,5'; 6,6') mit jeweils einem Eingang (12, 13, 14) der Schaltung (15) verbunden ist.

2. Umdrehungszähler nach Anspruch 1, **dadurch gekennzeichnet, daß** die Schaltelementpaare (4,4'; 5,5'; 6,6') gleichmäßig über den Umfang der Geberwelle (1) verteilt sind.

3. Umdrehungszähler nach Anspruch 1 oder 2, **dadurch gekennzeichnet, daß** die Schaltung (15) von einem Mikroprozessor gebildet wird, dessen Eingänge (12, 13, 14) jeweils über einen Pull-up-Widerstand (17, 18, 19) und einen Schalter (20, 21, 22) mit einer Spannungsquelle (23) verbindbar sind.

4. Umdrehungszähler nach einem der Ansprüche 1 bis 3, **dadurch gekennzeichnet, daß** der Magnet (3) sich über einen Drehwinkel (α) der Geberwelle (1) von höchstens 30° erstreckt.

## Claims

1. Electronic revolution counter for drive motors of working devices having a circuit for sensing the revolutions and the direction of rotation of an encoder shaft and having a counter unit which is dependent on the direction of rotation and adds or subtracts the revolutions for the purpose of displaying a respectively present sum value, switching elements which are arranged offset with respect to one another in the direction of rotation of the encoder shaft and are actuated by a magnetic field which changes as the encoder shaft rotates being used to generate pulses corresponding to the revolution speeds, **characterized in that** at least three pairs of switching elements (4, 4'; 5, 5'; 6, 6') each having two switching elements (4, 4' and 5, 5' and 6, 6', respectively) lying in series are distributed over the circumference of the encoder shaft (1), **in that** the contact tongues (7, 8) of the switching elements (4, 4'; 5, 5'; 6, 6') of the respective pair of switching elements (4, 4' or 5, 5' or 6, 6') can be moved in the opposite direction by the magnetic field acting upon them, **in that** a magnet (3) revolving with the encoder shaft (1) is used for generating the magnetic field and extends over an angle of rotation of the encoder shaft (1) which is smaller than half the angle of rotation covered by the encoder shaft between in each case two successive pairs of switching elements (4, 4' - 5, 5' or 5, 5' - 6, 6' or 6, 6' - 4, 4'), and **in that** in each case one switching element (4, 5, 6) of each pair of switching elements (4, 4'; 5, 5'; 6, 6') is connected to earth (10), and in each case one switching element (4', 5', 6') of each pair of switching elements (4, 4'; 5, 5'; 6, 6') is connected to in each case one input (12, 13, 14) of the circuit (15).

2. Revolution counter according to Claim 1, **characterized in that** the pairs of switching elements (4, 4'; 5, 5'; 6, 6') are distributed evenly over the circumference of the encoder shaft (1).

3. Revolution counter according to Claim 1 or 2, **characterized in that** the circuit (15) is formed by a microprocessor, whose inputs (12, 13, 14) can each be connected to a voltage source (23) via a pull-up resistor (17, 18, 19) and a switch (20, 21, 22).

4. Revolution counter according to one of Claims 1 to 3, **characterized in that** the magnet (3) extends over an angle of rotation (α) of the encoder shaft (1) of at most 30°.

## Revendications

1. Compte-tours électronique pour moteurs d'entraînement d'outil comportant un circuit pour relever les tours et le sens de rotation d'un arbre transmetteur ainsi qu'une unité de comptage dépendant du sens de rotation qui additionne ou soustrait les rotations en vue de l'affichage d'une somme actuelle dans chaque cas, des éléments de commutation actionnés par un champ magnétique variant avec la rotation de l'arbre transmetteur et disposés décalés les uns par rapport aux autres dans le sens de rotation de l'arbre transmetteur, servant à produire des impulsions correspondant au nombre de tours, **caractérisé en ce qu'**au moins trois paires d'éléments de commutation (4, 4' ; 5, 5' ; 6, 6') avec chacune deux éléments de commutation (4 , 4' ou 5, 5' ou 6, 6') en série, sont réparties sur le pourtour de l'arbre transmetteur (1), **en ce que** les languettes de contact (7, 8) des éléments de commutation (4, 4' ; 5, 5' ; 6, 6') de la paire d'éléments de commutation (4, 4' ou 5, 5' ou 6, 6') respective sont déplaçables dans le sens opposé par le champ magnétique agissant sur elles, **en ce que** pour produire le champ magnétique on a recours à un aimant (3) tournant avec l'arbre transmetteur (1), qui s'étend sur un angle de rotation de l'arbre transmetteur (1) lequel est inférieur à la moitié de l'angle de rotation que franchit l'arbre transmetteur entre deux paires d'éléments de commutation (4, 4' -5, 5' ou 5, 5' -6, 6' ou 6, 6' -4, 4') successives, et **en ce qu'**un élément de commutation (4, 5, 6) de cha que paire d'éléments de commutation (4, 4' ; 5, 5' ; 6, 6') est relié à la masse (10) et un élément de commutation (4', 5', 6') de chaque paire d'éléments de commutation (4, 4' ; 5, 5' ; 6, 6') est relié à une entrée (12, 13, 14) respective du circuit (15).

2. Compte-tours selon la revendication 1, **caractérisé en ce que** les paires d'éléments de commutation (4, 4' ; 5, 5' ; 6, 6') sont régulièrement réparties sur le pourtour de l'arbre transmetteur (1).

3. Compte-tours selon la revendication 1 ou 2, **caractérisé en ce que** le circuit (15) est formé par un microprocesseur dont les entrées (12, 13, 14) peuvent être reliées à une source de tension (23) chacune par une résistance pull-up (17, 18, 19) et un commutateur (20, 21, 22).

4. Compte-tours selon l'une des revendications 1 à 3, **caractérisé en ce que** l'aimant (3) s'étend sur un angle de rotation α de l'arbre transmetteur (1) de 30° au plus.
